# EUROPEAN PATENT SPECIFICATION

(11) **EP 2 876 379 B1**
(45) Date of publication and mention of the grant of the patent: **01.03.2017**
(21) Application number: 14193111.3
(22) Date of filing: 13.11.2014
(51) Int. Cl.: F24F 13/08, F24F 13/20, B29C 45/00, B29C 45/16, F25D 23/00, B29L 31/18

(54) **Front panel of indoor unit and manufacturing method thereof**
Frontpaneel einer Innenraumeinheit und Herstellungsverfahren dafür
Panneau avant d'une unité intérieure et son procédé de fabrication

(30) Priority: 14.11.2013 KR 20130138582
(43) Date of publication of application: 27.05.2015
(73) Proprietor: Samsung Electronics Co., Ltd, Gyeonggi-do 443-742 (KR)
(72) Inventor: Kim, Hyun Ho, Gyeonggi-do (KR); Ko, Jung Woo, Seoul (KR); Nam, Jin Hyung, Gyeonggi-do (KR); Moon, Hong Yeol, Gyeonggi-do (KR); Park, Jae Suk, Gyeonggi-do (KR); Yoo, Jae Sung, Gyeonggi-do (KR); Lim, Hyun Jin, Ulsan (KR)
(74) Representative: Taor, Simon Edward William

(56) References cited:
- EP-A2- 1 352 774
- WO-A2-2009/096613
- US-A1- 2011 047 888
- US-A1- 2011 181 066

## Description

Embodiments disclosed herein relate to a front panel of an indoor unit of an air-conditioner and a manufacturing method thereof.

In general, an air-conditioner refers to a device which keeps indoor air pleasant and suitable for human activity by using a cooling cycle. The air-conditioner serves to air-condition a room by repeatedly sucking in warm indoor air, heat-exchanging the sucked-in air with a low temperature refrigerant and then discharging the heat-exchanged cold air into the room, or to heat the room through a reverse operation.

The air-conditioner may air-condition or heat the room using the cooling cycle in which the refrigerant is circulated in a forward or in a reverse direction through a compressor, a condenser, an expansion valve and an evaporator. The compressor provides a gaseous refrigerant which is a high temperature and has a high pressure, and the condenser provides a liquid refrigerant which is room temperature and has a high pressure. The expansion valve depressurizes the liquid refrigerant which is room temperature and has a high pressure, and the evaporator evaporates the depressurized refrigerant into the gaseous refrigerant having a low temperature.

A ceiling type air-conditioner may include an indoor unit and an outdoor unit which are separated from each other. The indoor unit may be a device which is installed at a ceiling of an indoor space so as to air-condition or heat the room. Also, the ceiling type air-conditioner may include a main body which is disposed in an inner side of the ceiling of the indoor space, and a front panel which is attached to a front surface of the main body so as to be exposed from the ceiling. An air inlet port for sucking air into the main body may be formed at one side of the front panel, and an outlet port for discharging the air air-conditioned through a heat exchanger installed in the main body to the room may be formed at the other side thereof. WO 2009 096613 discloses a unit upon which the preamble of appending claim 1 is based.

Therefore, it is an aspect of the disclosure to provide a front panel of an indoor unit of an air-conditioner, which is manufactured by dual injection so that the indoor unit has a beautiful design suitable for various interiors of an indoor space.

Additional aspects of the disclosure will be set forth in part in the description which follows and, in part, will be apparent from the description, or may be learned by practice of the disclosure.

In accordance with an aspect of the disclosure, a front panel of an indoor unit may include a suction grill in which a plurality of ribs are inclinedly arranged and which are formed integrally with the front panel by dual injection molding. The plurality of ribs may include a sticking section to which a primary injection-molded part is fixed, a sealing section preventing an injection solution from flowing toward the primary injection-molded part during a secondary injection, and a scraping section formed between the adjacent ribs.

The sticking section may be provided at one side surface of the primary injection-molded part, and the sticking section may be a section fixed by a fixing device when a mold is moved to a position for the secondary injection after a primary injection.

The sticking section may have a width of at least about 1 mm.

The sticking section may have a grade of about 5°.

The sticking section may be at an end of a rib. The sticking section may be inclined relative to the extension direction of the rib, having an angle of inclination of about 5°.

A plurality of sealing sections may be provided at the primary injection-molded part so as to prevent a secondary injection solution from flowing to the primary injection-molded part. A first sealing section may be provided at a first side surface of the primary injection-molded part so as to prevent a secondary injection solution from flowing to the primary injection-molded part. A second sealing section may be provided at a second side surface of the primary injection-molded part to prevent a secondary injection solution from flowing to the primary injection-molded part. A secondary injection-molded part may be formed between the first sealing section and the second sealing section.

A width of the sealing section may correspond to (be equal to) about 0.5 times a thickness of the primary injection-molded part.

The suction grill may include a first suction rib and a second suction rib adjacent to the first suction rib, and the scraping section between one end of the first suction rib and the other end of the second suction rib may be at least about 5 mm. The front panel of the indoor unit which is integrally formed with the suction grill may be formed of materials having different colors or textures by dual injection molding.

The first injection-molded part may be formed of a transparent resin.

The secondary injection-molded part may be formed of a colored resin.

In accordance with an aspect of the disclosure, a method of manufacturing a front panel of an indoor unit, which is formed of materials having different colors or textures by dual injection molding and covers a front surface of a main body of the indoor unit, and in which a suction grill having a plurality of ribs is integrally formed may include injecting a primary injection solution into a mold to form a primary injection-molded part, primarily cooling, moving the mold in order to inject a secondary injection solution into the mold, injecting the secondary injection solution to form a secondary injection-molded part, secondarily cooling, and taking a molded part (e.g., the suction grill, including the primary injection-molded part and the secondary injection-molded part) out of the mold.

In the moving of the mold in order to inject the secondary injection solution into the mold, the mold may be moved in a state in which a sticking section of a primary injection-molded part is fixed by a fixing device.

The method may further include air-tightly sealing a sealing section provided at one side of the primary injection-molded part.

In the injecting of the primary injection solution, a transparent resin solution may be injected.

In the injecting of the secondary injection solution, a colored resin solution may be injected.

The injecting the secondary injection solution may include injecting the secondary injection solution between a first sealing section provided at a first side surface of the primary injection-molded part and a second sealing section provided at a second side surface of the primary injection-molded part.

In accordance with an aspect of the disclosure, a ceiling type air-conditioner may include an outdoor unit and an indoor unit, and the indoor unit may include a main body which includes a case, heat exchanger, and a blowing fan, and a front panel disposed in front of the case to form a front exterior of the indoor unit. The front panel may include a suction grill in which a plurality of ribs are inclinedly arranged and formed integrally with the front panel. At least one of the plurality of ribs may include a primary injection-molded part injection-molded with a first resin, and a secondary injection-molded part injection-molded with a second resin. The primary injection-molded part may include a first sealing section disposed at a first side of the primary injection-molded part, the first side being parallel to a ground plane, and a second sealing section disposed at a second side of the primary injection-molded part. The secondary injection-molded part may be disposed adjacent to a portion of the primary injection-molded part between the first sealing section and second sealing section.

These and/or other aspects of the disclosure will become apparent and more readily appreciated from the following description of the example embodiments, taken in conjunction with the accompanying drawings of which:
FIG. 1 is a view illustrating an indoor unit of a ceiling type air-conditioner in accordance with an embodiment of the disclosure;
FIG. 2 is a side cross-sectional view illustrating the indoor unit of the ceiling type air-conditioner in accordance with an embodiment of the disclosure;
FIG. 3 is a cross-sectional view illustrating a front panel of the indoor unit in accordance with an embodiment of the disclosure;
FIG. 4A is a cross-sectional view in accordance with an embodiment of the disclosure
FIG 4B is a cross-sectional view partially illustrating A of Fig 4A in accordance with an embodiment of the disclosure; and
FIG. 5 is a flow chart illustrating a method of manufacturing the front panel of the indoor unit in accordance with an embodiment of the disclosure.

Reference will now be made in detail to embodiments, the examples of which are illustrated in the accompanying drawings, wherein like reference numerals refer to like elements throughout. The embodiments described below are provided to explain the disclosure with reference to the drawings.

Reference will now be made in detail to embodiments of the disclosure, examples of which are illustrated in the accompanying drawings.

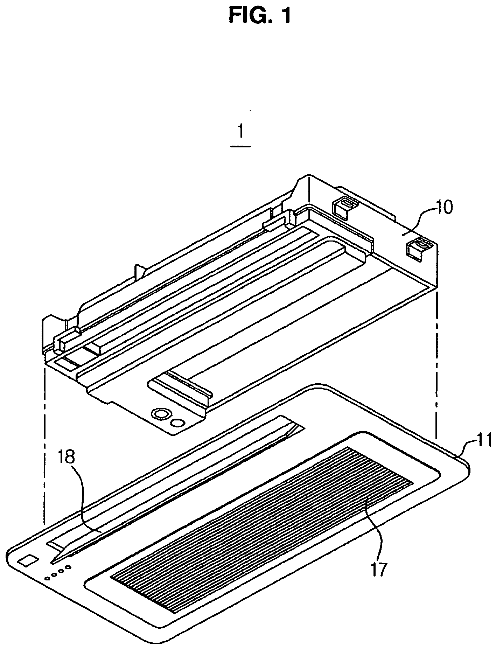

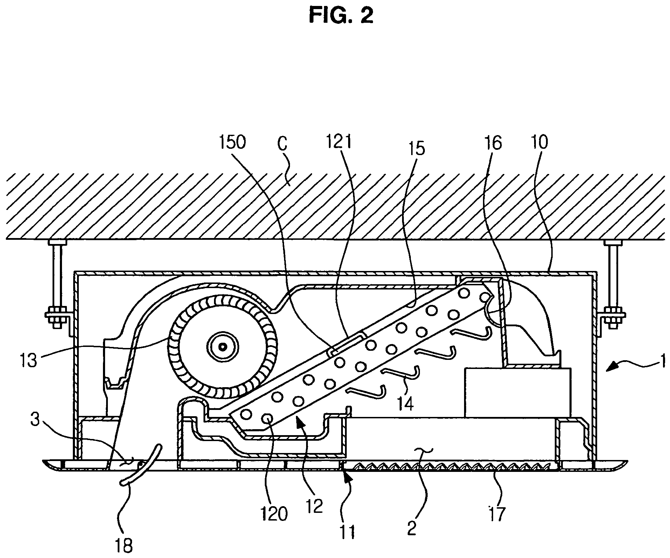

FIG. 1 is a view illustrating an indoor unit of a ceiling type air-conditioner in accordance with an embodiment of the disclosure, and FIG. 2 is a side cross-sectional view illustrating the indoor unit of the ceiling type air-conditioner in accordance with an embodiment of the disclosure.

Referring to FIGS. 1 and 2, an indoor unit 1 of a ceiling type air-conditioner in accordance with an embodiment of the disclosure may be installed at a ceiling C of an indoor space. The indoor unit 1 may be installed to protrude from the ceiling C or may be suspended from the ceiling C. The indoor unit 1 may include a main body and a front panel 11. The main body may include a case 10, a heat exchanger 12 and a blowing fan 13. The front panel 11 may be disposed in front of the case 10 and may form a front exterior of the indoor unit 1.

The heat exchanger 12 and the blowing fan 13 may be received in the case 10. The case 10 may be buried in the ceiling C or may be installed at the ceiling C. The heat exchanger 12 may be inclinedly installed in the case 10. A supporting part 14 which supports the heat exchanger 12 and also guides sucked air to the heat exchanger 12 may be provided under the heat exchanger 12. The blowing fan 13 may be disposed in front of the heat exchanger 12. The blowing fan 13 may be in the form of a tangential fan, for example. A motor (not shown) driving the blowing fan 13 may be further provided in the case 10. An inclined guide part 15 which guides the heat exchanger 12 so as to be installed inclinedly when the heat exchanger 12 is installed in the case 10 may be provided above the heat exchanger 12. A coupling member 150 which is coupled with a part of the heat exchanger 12 so as to fix the heat exchanger 12 may be provided at the inclined guide part 15. As shown in FIG. 2, the inclined guide part 15 may be disposed between the heat exchanger 12 and the blowing fan 13. A hooking part 121 of the heat exchanger 12 may be hooked to the coupling member 150. The hooking part 121 may be provided at a side plate 120 attached to a side surface of the heat exchanger 12. A stopping part 16 which supports the side surface of the heat exchanger 12 so as to prevent leftward and rightward movement of the heat exchanger 12 may be provided at an upper inner surface of the case 10.

An inlet port 2 and an outlet port 3 may be provided in front of the indoor unit 1. Air sucked in the main body through the inlet port 2 by the blowing fan 13 may be heat-exchanged at the heat exchanger 12 and then discharged to a room through the outlet port 3. Thus, air-conditioning or heating may be performed. As shown in FIG. 2, the heat exchanger 12 may be inclined at an angle such that a lower portion of the heat exchanger 12 is closer to the outlet port 3 than the upper portion of the heat exchanger 12. Further, as shown in FIG. 2, the heat exchanger 12 may be inclined at an angle such that the upper portion of the heat exchanger 12 is closer to the stopping part 16 than the lower portion of the heat exchanger 12.

A suction grill 17 and a discharge blade 18 may be provided at the front panel 11. The suction grill 17 may be provided at a side of the inlet port. The suction grill 17 may be configured by aligning a plurality of ribs which are inclinedly arranged. The suction grill 17 may be provided to cover the inlet port 2 and thus prevent an inner side of the main body from being exposed through the inlet port 2, and also to allow indoor air to be sucked through the inlet port 2.

The discharge blade 18 may be provided at a side of the outlet port 3. The discharge blade 18 may selectively cover the outlet port 3. The discharge blade 18 may be manufactured separately from the front panel 11 and then installed at the front panel 11. When the indoor unit 1 is not operated, the discharge blade 18 may cover the outlet port 3 so as to prevent the inner side of the main body from being exposed through the outlet port 3. When the indoor unit 1 is operated, the outlet port 3 may be opened so that the air sucked through the inlet port 2 is discharged to the room through the outlet port 3. For example, the discharge blade 18 may be hinged. When the indoor unit 1 is operated, the discharge blade 18 may be rotated around a hinge and thus may open the outlet port 3.

The front panel 11 may be manufactured by injection-molding a resin. The front panel 11 may be manufactured by dual injection molding. The suction grill 17 may be manufactured to be formed integrally with the front panel 11. The front panel 11 may be manufactured by dual-injection-molding resins having different colors, textures and so on.

As an example, the front panel 11 may be manufactured by dual-injection-molding a transparent resin and a colored resin. When a primary injection-molded part of the front panel 11 is injection-molded with the transparent resin, and a secondary injection-molded part thereof is injection-molded using the colored resin, the secondary injection-molded part formed of the colored resin may be configured to be seen subtly. Likewise, the front panel 11 may be manufactured by the dual injection molding of a combination of various resins, thereby providing beautiful designs corresponding to indoor interiors.

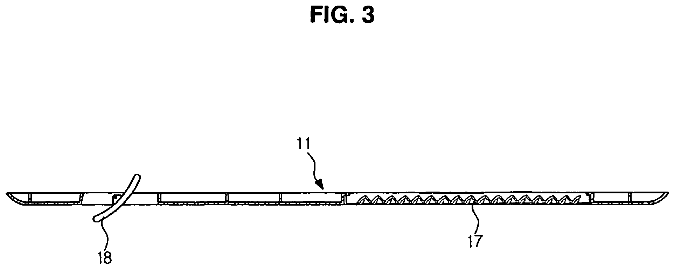

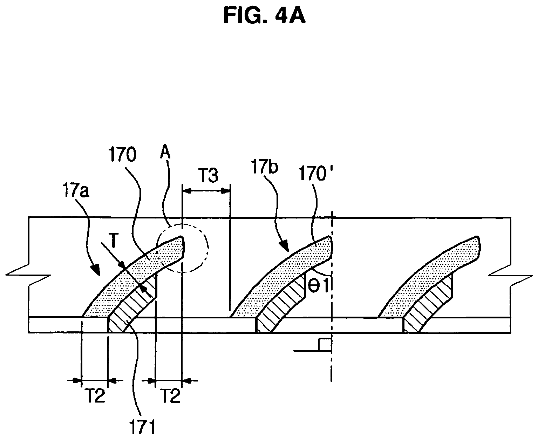

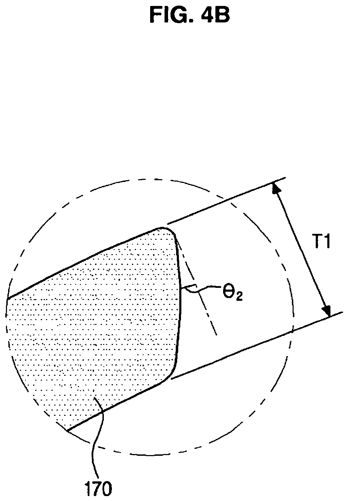

FIG. 3 is a cross-sectional view illustrating a front panel of the indoor unit in accordance with an embodiment of the disclosure, FIG. 4A is a cross-sectional view in accordance with an embodiment of the disclosure, and FIG 4B is a cross-sectional view partially illustrating A of Fig 4A in accordance with an embodiment of the disclosure Referring to FIGS. 3, 4A and 4B, the suction grill 17 in accordance with an embodiment of the disclosure may be provided by inclinedly arranging the plurality of ribs. An extension direction of a cross section of the suction grill 17 may form a predetermined angle θ1 with respect to a vertical line which is perpendicular to the front panel 11. The angle θ1 formed between the extension direction of the cross section of the suction grill 17 and the vertical line to one surface of the front panel 11 may be 0° or more and 90° or less. The suction grill 17 may include the primary injection-molded part 170 and the secondary injection-molded part 171. For example, as shown in FIG. 4A, the plurality of ribs may be arranged to be inclined in a manner similar to the heat exchanger 12. That is, the plurality of ribs may be inclined at an angle such that the upper portion of the plurality of ribs is closer to a side of the indoor unit 1 at which the stopping part 16 is disposed than the lower portion of the plurality of ribs. Similarly, the plurality of ribs may be inclined at an angle such that a lower portion of the plurality of ribs is closer to a side of the indoor unit at which the outlet port 3 is disposed than the upper portion of the plurality of ribs. Thus, as shown in FIGS. 3 and 4A, the plurality of ribs may have an inclined shape to be inclined in a first direction. However, in an alternative embodiment, the plurality of ribs may be inclined in a different direction, for example, a second direction which is opposite of the first direction.

When inclined shapes of the plurality of the ribs are manufactured by the dual injection molding, the ribs may not be easily taken out of a mold upon a secondary injection molding process. Further, if sealing is not properly achieved upon the secondary injection molding process, a secondary injection solution may flow down to a side of the primary injection-molded part.

When the suction grill 17 is integrally formed with the front panel 11 by the dual injection molding, the sealing should be achieved between the primary injection-molded part 170 and the secondary injection-molded part 171 in order to minimize a defect rate, and the injection molding should also be easily taken out of the mold.

A sticking section T1 may be provided at a side surface of the rib forming the suction grill 17. For example, the sticking section T1 may be provided at a side surface of the primary injection-molded part 170. The sticking section T1 may be a section fixed by a fixing device when the mold in which the primary injection-molded part 170 is received after a primary injection of the suction grill 17 is moved to a position for a secondary injection. The primary injection-molded part 170 may be fixed by the fixing device when being moved to the position for the secondary injection and thus prevented from being separated from the mold. As an example, in a cross section of the suction grill 17 as illustrated in FIG. 4B, the sticking section T1 may have a width of at least about 1 mm. The sticking section T1 may be provided to have a flat surface or a grade θ2 of about 5°. For example, as shown in FIGS. 4A and 4B, the sticking section T1 may be arranged to be inclined in a manner similar to the heat exchanger 12. That is, the sticking section T1 may be inclined at an angle such that the upper portion of the sticking section T1 is closer to a side of the indoor unit 1 at which the stopping part 16 is disposed than the lower portion of the sticking section T1. Similarly, the sticking section T1 may be inclined at an angle such that a lower portion of the sticking section T1 is closer to a side of the indoor unit at which the outlet port 3 is disposed than the upper portion of the sticking section T1.

The sticking section T1 may be at an end of a rib. The sticking section T1 may be inclined relative to the extension direction of the rib, having an angle of inclination of about 5°. A sealing section T2 may be provided at the other (e.g., lower) side surface of the rib forming the suction grill 17. The sealing section T2 may be provided in a plane section, for example. The sealing section T2 may be provided at the mold corresponding to the other (e.g., upper) side surface of the primary injection-molded part 170, and thus a plurality of sealing sections T2 may be provided. The secondary injection-molded part 171 may be formed by injecting a secondary injection solution between the sealing sections T2. A sealing part of the mold may be located at the sealing section T2. The sealing part serves to air-tightly seal the side of the primary injection-molded part 170. The secondary injection solution may be prevented from flowing toward the primary injection-molded part 170 by the sealing part provided with the sealing section T2. As an example, in the cross section of the suction grill 17, a width of the sealing section T2 may be provided to have about 0.5 times a thickness T of the primary injection-molded part 170.

A scraping section T3 may be provided between the adjacent ribs 17a and 17b of the suction grill. Specifically, when the adjacent ribs 17a and 17b of the suction grill are a first suction rib 17a and a second suction rib 17b, one end of the first suction rib 17a which is primarily injected and the other end of the second suction rib 17b which is primarily injected may be formed to be spaced apart from each other by a distance corresponding to the scraping section T3. As an example, the scraping section T3 may have a width of about 5 mm or more. As the scraping section T3 is provided, the injection-molded ribs 17a and 17b of the suction grill may be easily taken out of the mold.

Shapes corresponding to the sticking section T1, the sealing section T2 and the scraping section T3 may be provided at the mold by which the suction grill 17 is injection-molded. As the sticking section T1 is provided, the primary injection-molded parts 170 and 170' may be prevented from being separated from the mold while being moved to the position for the second injection. As the sealing section T2 is provided, the secondary injection solution may be prevented from flowing down to the primary injection-molded parts 170 and 170'. As the scraping section T3 is provided between the adjacent injection-molded ribs 17a and 17b, the injection-molded ribs 17a and 17b of the suction grill may be easily taken out of the mold.

As described above, since the front panel 11 is injection-molded by the mold having the sticking section T1, the sealing section T2 and the scraping section T3, the primary injection-molded part 170 and the secondary injection-molded part 171 may be formed to have a clear boundary at the suction grill 17. As shown in FIG. 4A for example, the secondary injection-molded part 171 may be disposed such that at least a portion of an outer circumferential edge borders at least a portion of an inner circumferential edge of the primary injection-molded part 170. After completion of the injection molding, the suction grill 17 may be easily taken out of the mold and thus prevented from being damaged or becoming defective. Therefore, the defect rate may be reduced and a manufacturing yield may be enhanced upon the dual injection molding of the front panel 11.

The secondary injection-molded part 171 may be injection-molded of a material having a different color and texture from the primary injection-molded part 170. Since the front panel 11 may be manufactured by using a combination of various colors and textures, the front panel 11 may have various designs. Therefore, since the front panel 11 may be manufactured to correspond to the interiors of the indoor space in which the indoor unit 1 is installed, it is possible to improve customer satisfaction. In an embodiment of the disclosure, the primary injection-molded part of the front panel 11 may be injection-molded with a transparent resin, and the secondary injection-molded part may be injection-molded using a colored resin. Alternatively, the primary injection-molded part of the front panel 11 may be injection-molded with a colored resin, and the secondary injection-molded part may be injection-molded using a transparent resin, both the primary injection-molded part and the secondary injection-molded part of the front panel 11 may be injection-molded with a colored resin, or both the primary injection-molded part and the secondary injection-molded part of the front panel 11 may be injection-molded with a transparent resin.

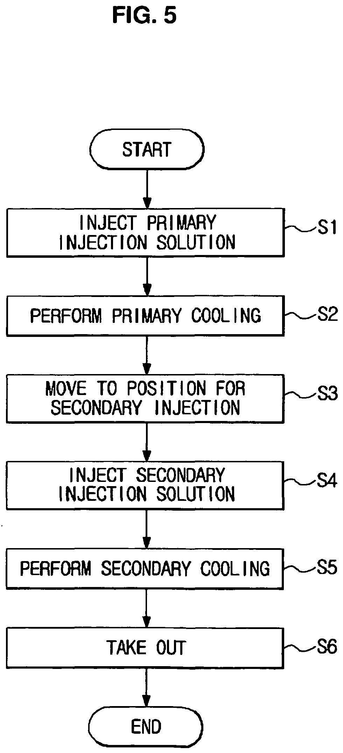

FIG. 5 is a flow chart illustrating a method of manufacturing the front panel of the indoor unit in accordance with an embodiment of the disclosure.
Referring to FIG. 5, a method of manufacturing the front panel of the indoor unit in accordance with an embodiment of the disclosure may include a process (S1) of injecting the primary injection solution capable of forming the primary injection-molded part 170 into the mold. For example, a transparent resin solution may be injected into the mold so that the primary injection-molded part 170 is formed to be transparent. If the primary injection solution is injected into the mold, a process (S2) of cooling the primary injection solution injected into the mold for a predetermined period of time may be performed. After the process (S2) of cooling the primary injection solution for the predetermined period of time is performed, a process (S3) of moving the mold to the position for the secondary injection may be performed. At this time, since the sticking section T1 is fixed by the fixing device, the primary injection-molded part 170 to form the suction grill 17 may be prevented from being separated from the mold. When the mold is moved to the position for the secondary injection, the secondary injection solution may be injected (S4). The secondary injection-molded part 171 may be formed of the colored resin. In order to mold the colored secondary injection-molded part 171, the secondary injection solution serving as a colored resin solution may be injected into the mold. At this time, the secondary injection solution may be prevented from being leaked toward the primary injection-molded part 170 by the sealing section T2. For example, the secondary injection solution may be injected between a first sealing section T2 provided at a first side surface of the primary injection-molded part and a second sealing section T2 provided at a second side surface of the primary injection-molded part. After the injection of the secondary injection solution, a cooling process (S5) may be performed for a predetermined period of time. After the secondary injection solution is cooled to a certain degree, the front panel 11 may be taken out of (extracted from) the mold by using a taking-out (extracting) member (S6). At this time, since the scraping section T3 is provided at the suction grill 17, the suction grill 17 may be easily taken out of the mold without any damage, even though the suction grill 17 is inclinedly formed. Therefore, by the above-mentioned method, the suction grill 17 of the front panel 11 may be easily manufactured through dual injection molding.

In accordance with an embodiment of the disclosure, the front panel of the indoor unit may be stably manufactured through dual injection molding so as to have the maximum yield. Since the front panel is manufactured by the dual injection molding, the indoor unit may have more various and beautiful designs.

Although example embodiments of the disclosure have been shown and described, it would be appreciated by those skilled in the art that changes may be made to these embodiments without departing from the principles of the disclosure, the scope of which is defined in the claims and their equivalents.

## Claims

1. A front panel of an indoor unit of an air conditioner, comprising:
a suction grill in which a plurality of ribs are inclinedly arranged **characterized in that** the suction grill is formed by dual injection molding,
wherein at least one of the plurality of ribs includes:
a sticking section to which a primary injection-molded part is fixed,
at least one sealing section arranged to prevent an injection solution from flowing toward the primary injection-molded part during a secondary injection, and
a scraping section formed between the at least one of the plurality of ribs and an adjacent rib.

2. The front panel according to claim 1, wherein the sticking section is provided at a side surface of the primary injection-molded part, and the sticking section is a section fixed by a fixing device when a mold is moved to a position for the secondary injection after a primary injection.

3. The front panel according to claim 2, wherein the sticking section has a width of at least about 1 mm.

4. The front panel according to claim 2 or 3, wherein the sticking section has a grade of about 5°.

5. The front panel according to any one of claims 1 to 4, wherein a first sealing section is provided at a first side surface of the primary injection-molded part to prevent a secondary injection solution from flowing to the primary injection-molded part.

6. The front panel according to claim 5, wherein a width of the sealing section corresponds to about 0.5 times a thickness of the primary injection-molded part.

7. The front panel according to claim 5 or 6, wherein a second sealing section is provided at a second side surface of the primary injection-molded part to prevent a secondary injection solution from flowing to the primary injection-molded part.

8. The front panel according to claim 7, wherein a secondary injection-molded part is formed between the first sealing section and the second sealing section.

9. The front panel according to any one of claims 1 to 8, wherein the suction grill comprises a first rib and a second rib adjacent to the first rib, and the scraping section between one end of the first rib and the other end of the second rib is at least about 5 mm.

10. The front panel according to any one of claims 1 to 9, wherein the first injection-molded part is formed of a transparent resin.

11. The front panel according to claim 10, wherein a secondary injection-molded part is formed of a colored resin.

12. An air conditioner having an indoor unit and an outdoor unit, wherein the indoor unit comprises a front panel according to any one of claims 1 to 11.

## Patentansprüche

1. Frontpaneel einer Innenbereichseinheit einer Klimaanlage, das Folgendes aufweist:
ein Ansauggitter, in dem mehrere Rippen geneigt angeordnet sind, **dadurch gekennzeichnet, dass** das Ansauggitter durch Zweikomponenten-Spritzgießen hergestellt wird,
wobei wenigstens eine der mehreren Rippen Folgendes beinhaltet:
einen Haftabschnitt, an dem ein primäres Spritzgussteil befestigt ist,
wenigstens einen Dichtungsabschnitt, der angeordnet ist, um zu verhindern, dass eine Spritzgusslösung während eines sekundären Spritzgießens zum primären Spritzgussteil hin fließt, und
einen Schabeabschnitt, der zwischen der wenigstens einen der mehreren Rippen und einer angrenzenden Rippe gebildet ist.

2. Frontpaneel nach Anspruch 1, wobei der Haftabschnitt an einer Seitenfläche des primären Spritzgussteils bereitgestellt ist und der Haftabschnitt ein Abschnitt ist, der mit einer Befestigungsvorrichtung befestigt wird, wenn eine Form nach einem primären Spritzgießen auf eine Position für das sekundäre Spritzgießen bewegt wird.

3. Frontpaneel nach Anspruch 2, wobei der Haftabschnitt eine Breite von wenigstens etwa 1 mm hat.

4. Frontpaneel nach Anspruch 2 oder 3, wobei der Haftabschnitt ein Gefälle von etwa 5° hat.

5. Frontpaneel nach einem der Ansprüche 1 bis 4, wobei ein erster Dichtungsabschnitt an einer ersten Seitenfläche des primären Spritzgussteils bereitgestellt ist, um zu verhindern, dass eine sekundäre Spritzgusslösung zu dem primären Spritzgussteil fließt.

6. Frontpaneel nach Anspruch 5, wobei eine Breite des Dichtungsabschnitts etwa dem 0,5-Fachen einer Dicke des primären Spritzgussteils entspricht.

7. Frontpaneel nach Anspruch 5 oder 6, wobei ein zweiter Dichtungsabschnitt an einer zweiten Seitenfläche des primären Spritzgussteils bereitgestellt ist, um zu verhindern, dass eine sekundäre Spritzgusslösung zu dem primären Spritzgussteil fließt.

8. Frontpaneel nach Anspruch 7, wobei ein sekundäres Spritzgussteil zwischen dem ersten Dichtungsabschnitt und dem zweiten Dichtungsabschnitt ausgebildet ist.

9. Frontpaneel nach einem der Ansprüche 1 bis 8, wobei das Ansauggitter eine erste Rippe und eine an die erste Rippe angrenzende zweite Rippe aufweist und der Schabeabschnitt zwischen einem Ende der ersten Rippe und dem anderen Ende der zweiten Rippe wenigstens etwa 5 mm beträgt.

10. Frontpaneel nach einem der Ansprüche 1 bis 9, wobei das erste Spritzgussteil aus einem transparenten Harz hergestellt ist.

11. Frontpaneel nach Anspruch 10, wobei ein sekundäres Spritzgussteil aus einem farbigen Harz hergestellt ist.

12. Klimaanlage mit einer Innenbereichseinheit und einer Außenbereichseinheit, wobei die Innenbereichseinheit ein Frontpaneel nach einem der Ansprüche 1 bis 11 aufweist.

## Revendications

1. Panneau avant d'une unité intérieure d'un climatiseur, comprenant :
une grille d'aspiration dans laquelle une pluralité de nervures est agencée de manière inclinée, **caractérisé en ce que** la grille d'aspiration est formée par moulage par double injection,
dans lequel au moins l'une de la pluralité de nervures comporte :
une section d'adhérence sur laquelle une pièce moulée par injection primaire est fixée,
au moins une section d'étanchéité agencée pour empêcher qu'une solution d'injection ne coule jusqu'à la pièce moulée par injection primaire durant une injection secondaire, et
une section de raclage formée entre l'au moins une de la pluralité de nervures et une nervure adjacente.

2. Panneau avant selon la revendication 1, dans lequel la section d'adhérence est fournie au niveau d'une surface latérale de la pièce moulée par injection primaire, et la section d'adhérence est une section fixée par un dispositif de fixation quand un moule est déplacé à une position d'injection secondaire après une injection primaire.

3. Panneau avant selon la revendication 2, dans lequel la section d'adhérence a une largeur d'au moins environ 1 mm.

4. Panneau avant selon la revendication 2 ou 3, dans lequel la section d'adhérence a une inclinaison d'environ 5°.

5. Panneau avant selon l'une quelconque des revendications 1 à 4, dans lequel une première section d'étanchéité est fournie au niveau d'une première surface latérale de la pièce moulée par injection primaire pour empêcher qu'une solution d'injection secondaire ne coule jusqu'à la pièce moulée par injection primaire.

6. Panneau avant selon la revendication 5, dans lequel une largeur de la section d'étanchéité correspond à environ 0,5 fois une épaisseur de la pièce moulée par injection primaire.

7. Panneau avant selon la revendication 5 ou 6, dans lequel une seconde section d'étanchéité est fournie au niveau d'une seconde surface latérale de la pièce moulée par injection primaire pour empêcher qu'une solution d'injection secondaire ne coule jusqu'à la pièce moulée par injection primaire.

8. Panneau avant selon la revendication 7, dans lequel une pièce moulée par injection secondaire est formée entre la première section d'étanchéité et la seconde section d'étanchéité.

9. Panneau avant selon l'une quelconque des revendications 1 à 8, dans lequel la grille d'aspiration comprend une première nervure et une seconde nervure adjacente à la première nervure, et la section de raclage entre une extrémité de la première nervure et l'autre extrémité de la seconde nervure est au moins d'environ 5 mm.

10. Panneau avant selon l'une quelconque des revendications 1 à 9, dans lequel la première pièce moulée par injection est formée en une résine transparente.

11. Panneau avant selon la revendication 10, dans lequel une pièce moulée par injection secondaire est formée en une résine colorée.

12. Climatiseur comportant une unité intérieure et une unité extérieure, dans lequel l'unité intérieure comprend un panneau avant selon l'une quelconque des revendications 1 à 11.
